# EUROPÄISCHE PATENTSCHRIFT

(11) **EP 4 316 958 B1**
(45) Veröffentlichungstag und Bekanntmachung des Hinweises auf die Patenterteilung: **12.02.2025**
(21) Anmeldenummer: 23186935.5
(22) Anmeldetag: 21.07.2023
(51) Int. Cl.: B62J 9/25, B62J 11/00

(54) **MECHANISCHES VERSCHLUSSELEMENT**
MECHANICAL LOCKING ELEMENT
ELÉMENT DE FERMETURE MÉCANIQUE

(30) Priorität: 02.08.2022 DE 102022119357
(43) Veröffentlichungstag der Anmeldung: 07.02.2024
(73) Patentinhaber: Hepco & Becker GmbH, 66955 Pirmasens (DE)
(72) Erfinder: Arnold, Nils, 66885 Altenglan (DE)
(74) Vertreter: Jeck, Jonathan

(56) Entgegenhaltungen:
- EP-A1- 2 289 783

## Beschreibung

Die vorliegende Erfindung betrifft ein Verschlusselement, insbesondere einen Tankringverschluss, gemäß dem Oberbegriff des Anspruchs 1. Dieser ist zum Befestigen eines Gepäckstücks oder eines Motorradzubehörs an einem Motorrad insbesondere dessen Tank oder Heckvorgesehen.

Gattungsgemäß weist ein Verschlusselement einen motoradseitigen Adapter, insbesondere einen Tankringadapter auf, welcher fest mit dem Motorrad, insbesondere dessen Tank oder Heck(bereich) verbindbar ist und zwei im Abstand zueinander angeordnete Aufnahmenocken trägt, welche vorzugsweise parallel zueinander angeordnet sind. Das Verschlusselement weist weiter eine Verriegelungseinrichtung auf, welche fest mit der Rückseite des Gepäckstücks oder dem Motorzubehör verbindbar ist, wobei die Verriegelungseinrichtung ein an einem Gepäckstück oder Motorzubehör statischen festlegbares Gehäuse und ein im Gehäuse gelagerten Schieber aufweist, wobei das Gehäuse Öffnungen umfasst, in welche die Aufnahmenocken einführbar sind.

Der Schieber an dem Gehäuse ist vorzugsweise von einer Halteposition zu einer Entriegelungsposition verfahrbar, um den Aufnahmenocken in der Öffnung zu halten, wenn sich der Schieber in der Halteposition befindet.

Aus EP2289783A1 ist ein Adapter zum Anbringen von Gegenständen am Tank eines Motorrades bekannt, der aus einem mit dem Tank des Motorrades verbindbaren Unterteil und einem mit dem anzubringenden Gegenstand koppelbaren Oberteil besteht. Aus dem Stand der Technik DE 10 2021037 912 B4 ist ein Tankringverschluss bekannt, bei welchem längliche Halteelemente eines Trankringadapters in Öffnungen eines Verbindungselements einführbar sind, um den Tankringadapter an dem Verbindungselement festzulegen. Zwar weist das Verbindungselement ein beweglich gelagertes Element zum Lösen der Verbindung auf, während des Verbindevorgangs sind die Teile des Verbindungselements jedoch statisch. Das Verbinden des Haltetelements mit dem Verbindungselement findet ausschließlich über eine sehr starke magnetische Anziehungskraft der beiden Teile statt, welche das Halteelement des Trankringadapters in die vorgesehene Position in den Öffnungen des Verbindungselements zwingt.

Die Halteelemente werden in den Öffnungen des Verbindungselements durch eine Kombination von seitlichen Rastverbindungen in dem Verbindungselement und magnetischer Anziehungskraft gehalten.

Durch eine Verlagerung des beweglich gelagerten Elements, an welchem die Magnete des Verbindungselements vorgesehen sind, werden die gleichpoligen Magnetteile von Haltelementen und Verbindungselement einander zugeführt, was eine Abstoßung der Teile begünstigt und diese voneinander löst.

Auf Grund der Anziehungskraft der starken Magnete ist ein sehr großer Kraftaufwand erforderlich, um diese gegeneinander zu verschieben. Dies sorgt unter anderem dafür, dass beim Lösen der Verbindung ein erheblicher Kraftaufwand erforderlich ist, um das Verriegelungselement zu verlagern und den Tankringadapter aus der Verriegelungseinrichtung zu lösen.

Das Verriegelungselement reagiert demnach auf die sich abstoßenden Magnete zwischen Verriegelungselement und Verbindungsbereich am Tankringverschluss. Eine festgelegte Position des beweglich gelagerten Elements, aus welcher dieses nur durch Lösen einer Rastverbindung herausbewegt werden kann, ist nicht vorgesehen. Das bewegliche Element ist somit frei verschieblich am Verbindungselement gelagert.

Bei einer Prüfung dieses Tankringverschlusses konnte festgestellt werden, dass der Kraftaufwand beim Lösen der Halteelemente aus dem Verbindungselement durch Verlagerung des beweglich gelagerten Elements zu einem unkontrollierten Lösevorgang führen kann, was mit einem erhöhten Verletzungsrisiko verbunden ist.

Die vorliegende Erfindung stellt sich die Aufgabe, einen alternativen Verschlussmechanismus für ein Verschlusselement bereitzustellen, welcher die Nachteile des Stands der Technik überwindet.

Die vorliegende Erfindung löst die Aufgabe durch die kennzeichnenden Merkmale des Tankringverschlusses nach Anspruch 1.

Diese sind,
- dass an dem Gehäuse mindestens ein Rastelement angeordnet ist, welches mit einem Federkörper des Schiebers wechselwirkt und ausgebildet ist, den Schieber in der Entriegelungsposition zu halten und
- dass die Aufnahmenocken einen Anschlag aufweisen, welcher angepasst ist, beim Einführen der Aufnahmenocken in die Öffnung mit dem Federkörper wechselzuwirken und diesen von dem Rastelement zu lösen.

Bevorzugte Ausführungsformen sind in den abhängigen Ansprüchen angegeben.

Nach der vorliegenden Erfindung wird demnach ein mehrteiliges Verschlusselement zur Verfügung gestellt, welches ein kräftefreies Einführen der Aufnahmenocken in die Öffnungen des Gehäuses der Verriegelungseinrichtung ermöglicht.

Da der Schieber entgegen einer Federkraft in die Entriegelungsposition verschoben wird und in dieser gehalten ist, setzt das Lösen des Federkörpers aus der Rastverbindung eine Rückstellkraft frei, welche den Schieber in die Halteposition zurückbewegt.

Die Entriegelungsposition bezieht sich nach der vorliegenden Erfindung auf die Position des Schiebers, in welcher die Aufnahmenocken aus den Öffnungen des Gehäuses lösbar sind.

Durch eine physische Wechselwirkung des Aufnahmenockens mit dem Federkörper werden der Schieber aus seiner Entriegelungsposition gelöst und der Aufnahmenocken vom Schieber in dessen Halteposition gehalten.

Durch einfache händische Verlagerung des Schiebers in die Entriegelungsposition kann der Schieber in dieser festgelegt werden. Anschließend kann die Verriegelungseinrichtung beziehungsweise das mit der Verriegelungseinrichtung verbundene Gepäckstück oder Motorradzubehör mit beiden Händen von dem motoradseitigen Adapter abgenommen werden. Die bisher aus dem Stand der Technik bekannten Lösung macht es erforderlich, bei einem Entriegelungsversuch gleichzeitig das Gepäck mit einer zweiten Hand zu sichern, da die Verbindung zwischen Tankringadapter und Verriegelungseinrichtung durch die sich abstoßenden Magnete beim Lösen der Verbindung unmittelbar dazu führt, dass die Verriegelungseinrichtung aus dem Tankringadapter herausspringt.

Zudem ist keine Festlegung des Verriegelungselements in einer Entriegelungsposition vorgesehen, wodurch die Verlagerung des Verriegelungselements in eine Entriegelungsposition dauerhaft durch einen Benutzer aufrechterhalten werden muss, während das Gepäckstück von dem Tankringadapter entfernt wird. Dies hat den Nachteil, dass nur eine Hand zur Verfügung steht, wenn das Gepäckstück oder Motorradzubehör von dem Motorradtank gelöst wird.

Dieses Sicherheitsproblem wird durch die vorliegende Erfindung gelöst.

Nach der vorliegenden Erfindung wird in den meisten Fällen der Einfachheit halber auf ein Tankringverschluss und/oder einen Tankringadapter, als eines der Ausführungsmöglichkeiten der vorliegenden Erfindung, Bezug genommen. Zur Offenbarung der vorliegenden Erfindung gehört jedoch auch, dass bei jeder Nennung der beiden Begriffe "Tankringverschluss" oder "Tankringadapter" entsprechend ein "Verschlusselement" bzw. ein "motoradseitiger Adapter" gemeint ist, da das Gepäckstück/Zubehör durch die vorliegende Erfindung auch in einem anderen Bereich des Motorrads befestigt werden kann, insbesondere überall dort, wo das erfindungsgemäße Verschlusselement am Motorrad festlegbar ist.

In der Beschreibung und den Patentansprüchen sind die Begriffe "Tankringverschluss" und "Verschlusselement" bzw. "Tankringadapter" und "motoradseitigen Adapter" austauschbar und in der allgemeinen breiten Bedeutung von Verschlusselement bzw. motoradseitigen Adapter zu verstehen. Eine Festlegung der Erfindung auf ein Verschlusselement für den Tank eines Motorrads ist nicht vorgesehen und wird den Einsatzmöglichkeiten der Erfindung auch nicht gerecht. Die Gesamtoffenbarung der vorliegenden Erfindung richtet sich nach diesen vorstehenden Grundsätzen. Dies betrifft auch Ausführungen bezüglich einer konkreten Ausführungsform nach den Figuren mit zugehöriger Beschreibung.

Vorzugsweise ist der Aufnahmenocken ein länglicher Körper, welcher parallel zu seiner Längsrichtung in die Öffnung der Verriegelungseinrichtung einführbar ist. Dadurch kann eine besonders gute Kraftverteilung der Hebelkräfte zwischen Verriegelungseinrichtung und Tankringadapter bereitgestellt werden.

Nach der vorliegenden Erfindung kann unter der Öffnung eine tatsächliche Ausnehmung im Gehäuse des Verriegelungselements verstanden werden. Unter Öffnung kann jedoch auch ein im Gehäuse innenliegender Bereich verstanden werden, welcher sich von der Öffnungsausnehmung im Gehäuse nach innen erstreckt und den Bereich beschreiben kann, in welchen der jeweilige Aufnahmenocken in dem Gehäuse festlegbar ist.

Nach einer bevorzugten Ausführungsform der vorliegenden Erfindung ist es vorgesehen, dass der Schieber an dem Gehäuse entlang von Führungsnuten verfahrbar gelagert ist. Hierbei kann/können eine Führungsnut -jedoch bevorzugt auch mindestens zwei Führungsnuten - vorgesehen sein. Führungsnuten ermöglichen eine zuverlässige Verlagerung des Schiebers in/an dem Gehäuse, wodurch eine verlässliche Verlagerung zwischen der Entriegelungsposition und der Halteposition gewährleistet wird.

Eine zweckmäßige Weiterbildung der vorliegenden Erfindung kann darin bestehen, dass jeweils einem Aufnahmenocken ein Federelement an dem Schieber zugeordnet ist. Jedem Federelement wiederum kann ein Rastelement zugeordnet sein, wobei durch deren Rastverbindung der Schieber in der Entriegelungsposition gehalten werden kann. Durch das Vorsehen mehrerer Federelemente vorzugsweise an gegenüberliegenden Enden des Schiebers, insbesondere quer zu einer Verfahrrichtung, kann eine besonders verlässliche Festlegung und Lösung des Schiebers aus der Verrastung in der Entriegelungsposition bereitgestellt werden. Dies kann insbesondere einer einseitigen Belastung oder einem Festsetzen des Schiebers in der/den Führungsnut(en) vorbeugen. Vorzugsweise kann dies dadurch erreicht werden, dass die Kräfteverteilung des unter Federspannung stehenden Schiebers in der Entriegelungsposition gleichmäßig über die Breite des Schiebers bereitgestellt ist. Besonders bevorzugt ist jedem Aufnahmeelement an dem Schieber ein Federelement mit dazugehörigem Rastelement zugeordnet.

Nach einer bevorzugten Weiterbildung der vorliegenden Erfindung ist es vorgesehen, dass der Schieber Aufnahmeelemente aufweist, welche den Öffnungen und/oder den Aufnahmenocken in der Halteposition des Schiebers zugestellt sind. Die Aufnahmeelemente können ausgebildet sein, die Aufnahmenocken, welche durch die Öffnungen in das Innere des Gehäuses ragen, in diesen festzuhalten. Die Aufnahmeelemente können zumindest teilweise von der Öffnung entfernt sein, wenn sich der Schieber in der Entriegelungsposition befindet. Die Öffnung kann dabei durch das Aufnahmeelement zumindest soweit freigegeben sein, dass ein ungehindertes Einführen der Aufnahmenocken durch die Öffnungen/in die Öffnung in das/in dem Gehäuse ermöglicht ist.

Nach einer besonders bevorzugten Weiterbildung der vorliegenden Erfindung ist es vorgesehen, dass das Aufnahmeelement mindestens einen Flügel aufweist, welcher die Aufnahmenocken haltend hintergreift, wenn sich der Schieber in der Halteposition befindet.

Die Aufnahmeelemente können ausgebildet sein, die in die Öffnung des Gehäuses eingeführten Aufnahmenocken im Innern des Gehäuses festzuhalten. Die Aufnahmeelemente können dafür beispielsweise hülsenförmig ausgebildet sein und/oder seitlich den sich im Gehäuse befindlichen Aufnahmenocken überstülpen und/oder umgreifen/hintergreifen und/oder zugestellt sein.

Nach der vorliegenden Erfindung kann das Aufnahmeelement zumindest einen Flügel aufweisen, welcher ausgebildet ist, den Aufnahmenocken zu hintergreifen, wenn dieser durch die Öffnungen im Gehäuse in dieses hineinragt. Die bevorzugte Hülsenform der Aufnahmeelemente kann sich demnach auf die Flügel beschränken oder diese zumindest aufweisen und/oder die Aufnahmenocken nur teilweise umschlie-ßen.

Zweckmäßigerweise ist es vorgesehen, dass die Aufnahmenocken, vorzugsweise auf einer der Öffnung im betriebsgemäße Verbindungszustand von Tankringadapter und Verriegelungseinrichtung abgewandten Seite, also in einer dem Tankringadapter zugewandten Seite, mindestens einen Vorsprung aufweisen, welcher von den Aufnahmeelementen hintergriffen ist.

Eine besonders zuverlässige Festlegung der Aufnahmenocken im Innern des Gehäuses der Verriegelungseinrichtung kann dadurch bereitgestellt sein, dass die Aufnahmenocken einen Vorsprung oder eine Hinterschneidung aufweisen, welche mit den Aufnahmeelementen in Eingriff bringbar sind.

Besonders bevorzugt können hierbei die Flügel der Aufnahmeelemente die Aufnahmenocken seitlich umschließen/hintergreifen/umgreifen. Die Aufnahmenocken können bevorzugt länglich oder stabförmig ausgebildet sein. Dabei sind die Aufnahmenocken parallel zu deren Längsachse in die Öffnungen im Gehäuse der Verriegelungseinrichtung einführbar. Der Vorsprung oder die Hinterschneidung kann sich dabei parallel zur Längsachse der Aufnahmenocken erstrecken.

Grundsätzlich können die Aufnahmenocken eine beliebige Geometrie aufweisen und können auch zueinander in einer von der parallelen Ausrichtung abweichenden Anordnung bereitgestellt sein. Für die am Tankringadapter zwischen Gepäckstück und Motorradtank auftretenden Hebelkräfte kann es jedoch vorteilhaft sein, längliche Aufnahmenocken vorzusehen, welche sich parallel zum Tankringadapter und/oder Gehäuse der Verriegelungseinrichtung und/oder zum Motorradtank und/oder zum Gepäckstück oder Motorradzubehör und/oder zur Verlagerungsrichtung des Schiebers zwischen Entriegelungsposition und Halteposition und/oder zum Aufnahmeelement beziehungsweise dessen Gehäuse erstrecken. Besonders bevorzugt erstrecken sich die Flügel der Aufnahmeelemente parallel zur Längsrichtung der Aufnahmenocken bzw. dessen Hinterschneidungen/Vorspru(ü)ng(en).

Besonders bevorzugt ist es vorgesehen, dass der Schieber an dem Gehäuse entlang von Führungsnuten verfahrbar gelagert ist. Hierdurch ist eine zuverlässige Verlagerbarkeit des Schiebers zwischen Entriegelungsposition und Halteposition bereitgestellt.

Eine besonders zweckmäßige Weiterbildung der vorliegenden Erfindung besteht darin, dass das Federelement an dem Schieber oberhalb der Gehäuseöffnung gelagert ist. Dabei kann das Federelement gegenüber der Öffnung im Gehäuse so angeordnet sein, dass durch das Einführen der Aufnahmenocken diese das Federelement direkt oder indirekt kontaktieren und dadurch eine Rastverbindung lösen, welche den Schieber in der Entriegelungsposition hält.

Der Aufnahmenocken kann einen Anschlag aufweisen, welcher mit dem Federelement oder einem an dem Federelement angeordneten Rastanschlag kontaktierbar ist, wenn der Aufnahmenocken durch die Öffnung im Gehäuse in das Innere des Gehäuses eingeführt wird.

Das Einführen des Aufnahmenockens/der Aufnahmenocken durch die Öffnung(en) des Gehäuses in dessen Inneres kann somit ein Lösen des Schiebers aus dessen Entriegelungsposition bewirken und eine Verlagerung des Schiebers in dessen Halteposition unter Entspannung einer Federkraft auslösen. In der Halteposition kann/können das Aufnahmeelement/die Aufnahmeelemente des Schiebers dem Bereich im Inneren des Gehäuses zugestellt sein, in welchem sich die Aufnahmenocken befinden und dadurch diese im Innern des Gehäuses vorzugsweise umschließend zurückhalten.

Nach einer zweckmäßigen Weiterbildung der vorliegenden Erfindung ist es vorgesehen, dass der Schieber ein Verbindungsmittel für eine Verlängerung, insbesondere eine Schlaufe, aufweist, über welche der Schieber in die Entriegelungsposition ziehend verlagerbar ist.

Das Verbindungsmittel kann sich in der Verlängerung der Nuten des Gehäuses befinden, entlang welcher der Schieber zwischen der Entriegelungsposition und Halteposition verfahrbar ist.

Bevorzugt ist das Verbindungsmittel dabei an dem Ende des Schiebers angeordnet, welches der Entriegelungsposition zugewandt ist. Sofern sich der Schieber in der Halteposition befindet, kann der Schieber durch eine entsprechende Zugkraft an dem Verbindungsmittel in die Entriegelungsposition verlagert werden, in welcher der Schieber einrastet.

Durch das Einführen der Aufnahmenocken in die Öffnungen des Gehäuses und das Zustellen der Aufnahmenocken zu den Federelementen/dem Rastanschlag an dem Schieber ist der Schieber aus seiner eingerasteten Entriegelungsposition lösbar und der Halteposition zur Verbindung von Tankringadapter und Verriegelungseinrichtung zustellbar.

Die Erfindung wird nachfolgend anhand der beigefügten Zeichnungen näher erläutert.
- Figur 1a-c: perspektivische Darstellung des Tankringadapters und der Verriegelungseinrichtung,
- Figur 2a-e: frontale und perspektivische Ansichten des Schiebers der Verriegelungseinrichtung,
- Figur 3a-c: frontale und perspektivische Ansichten des Gehäuses der Verriegelungseinrichtung,
- Figur 4a-b: perspektivische Darstellungen der Verriegelungseinrichtung in der Entriegelungsposition des Schiebers,
- Figur 5a-d: frontale und perspektivische Darstellungen der Verriegelungseinrichtung mit Schieber in der Halteposition und
- Figur 6a-c: Tankringverschluss mit Tankringadapter und Verriegelungseinrichtung im betriebsgemäßen Verbindungszustand und Schieber in Halteposition.

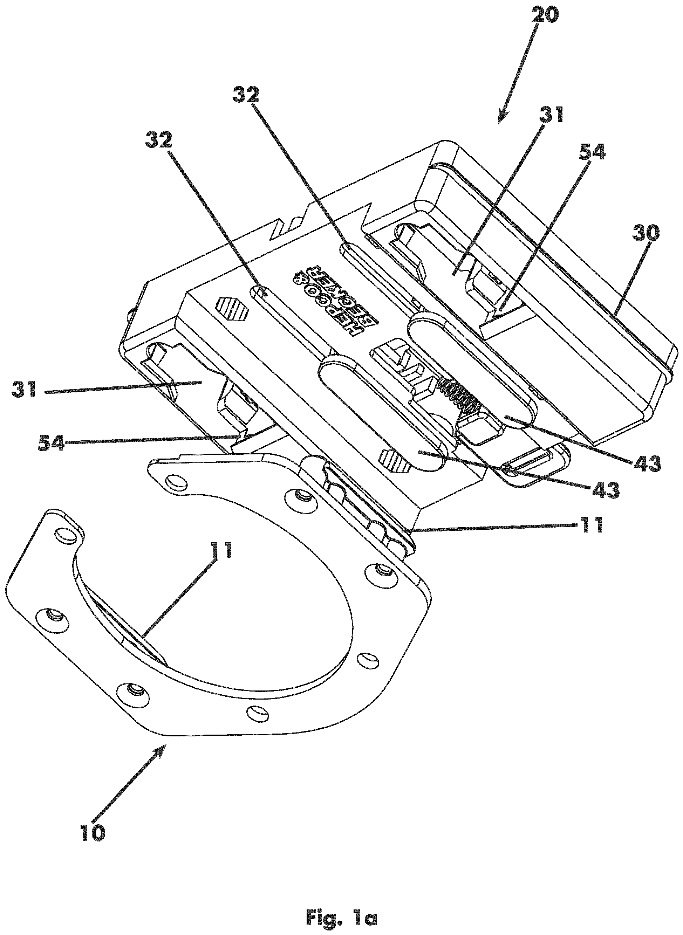

Die Figur 1a zeigt eine perspektivische Darstellung des mehrteiligen Tankringverschlusses, aufweisend den Tankringadapter 10 und die Verriegelungseinrichtung 20.

Der Tankringadapters 10 ist ausgebildet, an einem Tankdeckelbereich eines Motorradtanks ortsfest festgelegt zu werden. Er weist mindestens einen Aufnahmenocken 11 auf, welcher als Verbindungsglied zur Verriegelungseinrichtung 20 dient.

Aus Gründen der Einfachheit ist die Erfindung nachfolgend für zwei Aufnahmenocken beschrieben. Alle Aussagen gelten jedoch auch für einen oder mehrere Aufnahmenocken und die korrespondierenden Einrichtungen des Tankringverschlusses.

Die Aufnahmenocken 11 sind in die Öffnungen 31 der Verriegelungseinrichtung 20 einführbar und können von der Verriegelungseinrichtung in diesen festlegend gehalten werden.

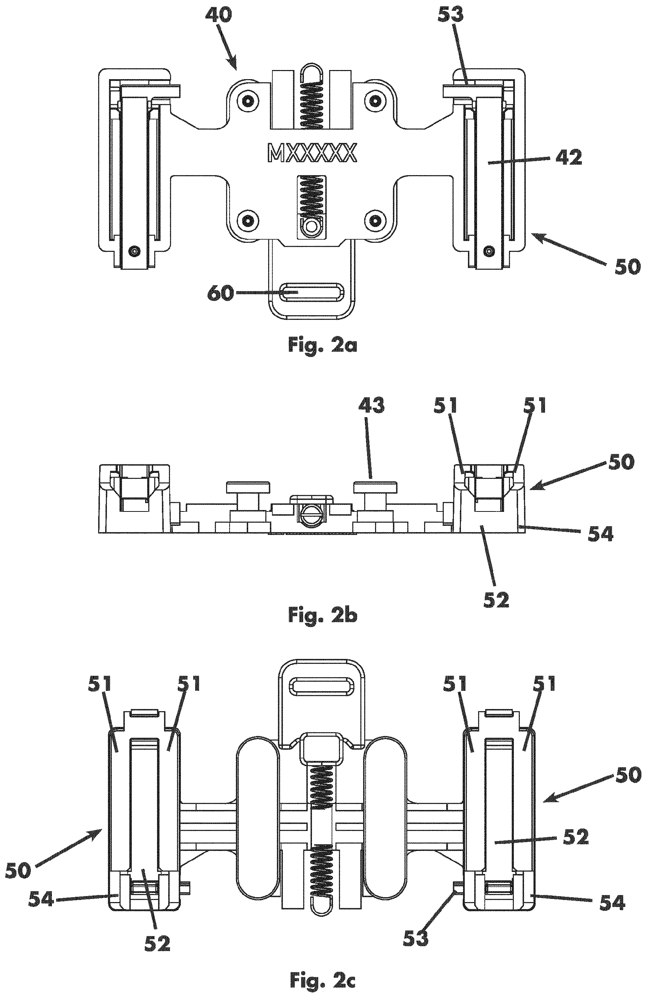

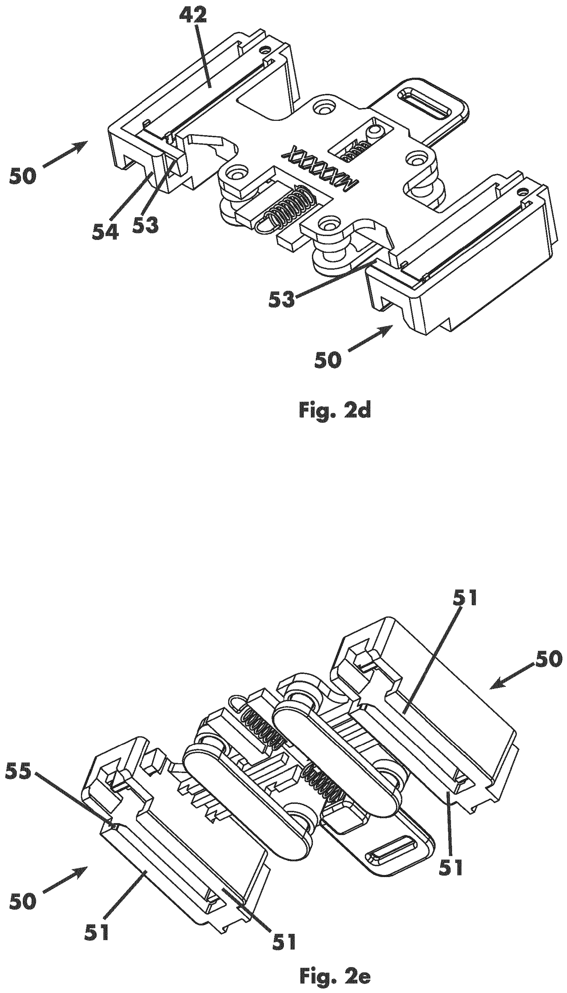

Die Verbindung von Tankringadapter 10 und Verriegelungseinrichtung 20 kann dabei über eine Festlegung der Aufnahmenocken 11 in Aufnahmegehäusen 54 von Aufnahmeelementen 50, wie sie näher in Figur 2 dargestellt sind, erfolgen.

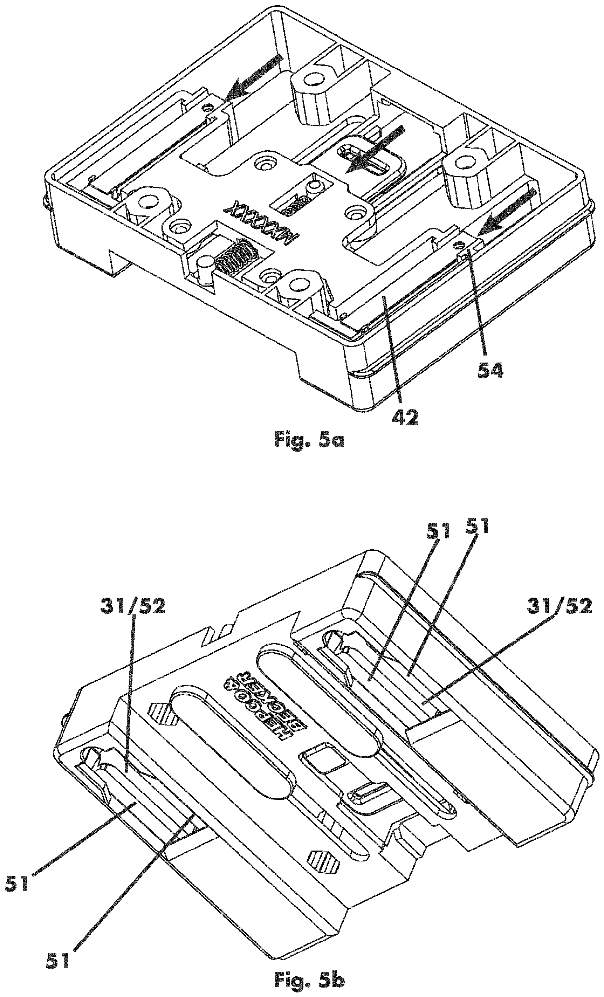

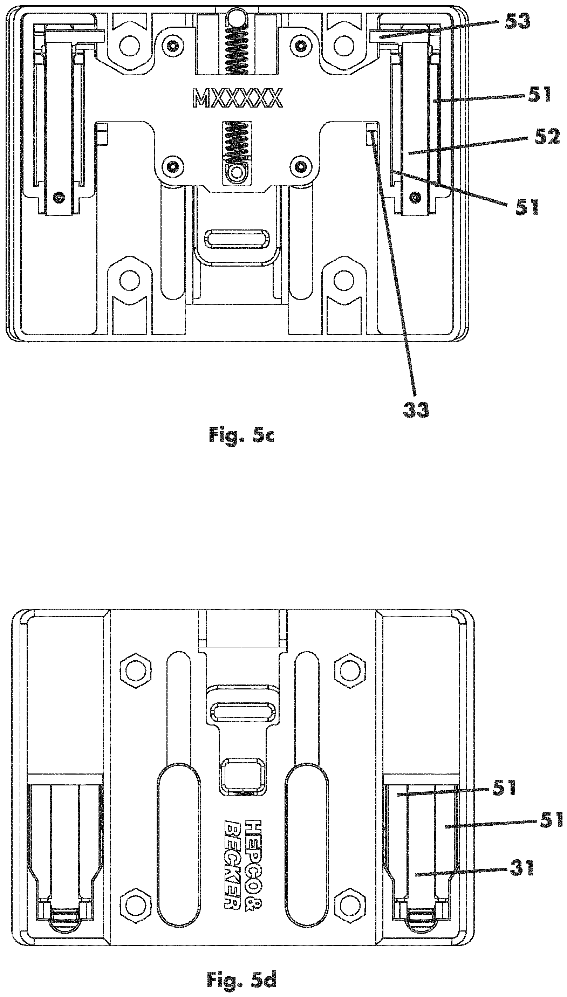

Das Aufnahmegehäuse 54 muss nicht zwingend eine die Aufnahmenocken umschließende Ausgestaltung aufweisen. Wesentlich ist beim Aufnahmegehäuse nur, dass es ausgebildet ist, die Aufnahmenocken in der Öffnung 31 der Verriegelungseinrichtung 20 zu halten, wenn sich der Schieber 40 in der Halteposition (Fig. 5) befindet.

Die Verriegelungseinrichtung 20 kann ein Gehäuse 30 und einen Schieber 40 aufweisen, welcher insbesonders über Führungselemente 43 in den Führungsnuten 32 verfahrbar gelagert sein kann.

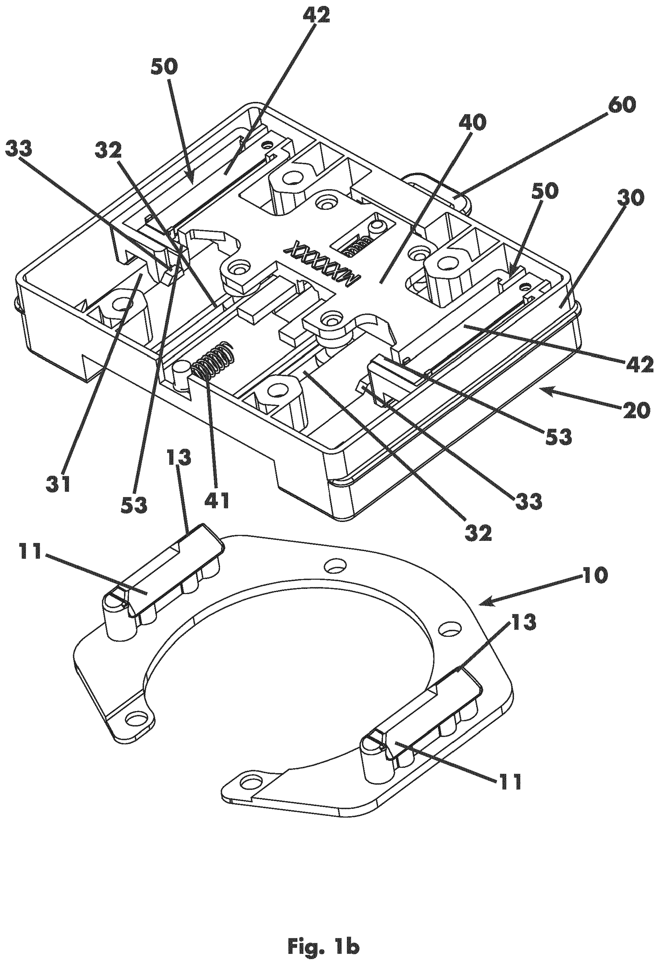

Figur 1b zeigt den Gegenstand gemäß Figur 1a, jedoch in einer um etwa 180° gedrehten Ansicht, in welcher die Aufnahmenocken 11 und die Mechanik der Verriegelungseinrichtung 20 ersichtlich ist. Der Schieber 40 kann in dem Gehäuse 30 entlang der Nuten 32 verschieblich gelagert sein. Dabei ist in Figur 1b der Schieber gegenüber dem Gehäuse in dessen Entriegelungsposition dargestellt.

Die Aufnahmeelemente 50 an dem Schieber 40 sind demnach zumindest teilweise aus den/von den Öffnungen 31, in welche die Aufnahmenocken 11 des Tankringadapters 10 einführbar sind, zurückgezogen. Dadurch kann eine ungehinderte Einführbarkeit der Aufnahmenocken 11 in die Öffnungen 31 gewährleistet sein. Vorzugsweise sind die Aufnahmeelemente 50 innerhalb des Gehäuses 30 verschieblich gelagert.

An dem Gehäuse 30 kann mindestens ein Rastelement 33 vorgesehen sein, welches den Schieber 40 in der Entriegelungsposition entgegen der Federkraft der Feder 41 zurückhalten kann. Solange der Schieber 40 in der Entriegelungsposition gehalten ist, kann die Öffnung 31 für die Aufnahmenocken 11 zugänglich sein.

Der Tankringverschluss kann grundsätzlich so aufgebaut sein, dass der Schieber 40 durch ein Einführen der Aufnahmenocken 11 in die Öffnungen 31 aus seiner eingerasteten Entriegelungsposition lösbar ist und der Schieber in Richtung Halteposition verschiebbar ist, wobei sich die Feder 41 entspannen kann.

Die Feder 41 kann zwischen dem Gehäuse und dem Schieber entlang der Verfahrrichtung des Schiebers 40 in dem Gehäuse 30 verbindend angeordnet sein.

Der Schieber 40, insbesondere dessen Aufnahmeelement 50, kann einen Rastanschlag 53 aufweisen, welcher mit dem Rastelement 33 in der Entriegelungsposition des Schiebers 40 wechselwirkt und den Schieber in der Entriegelungsposition zurückhält. Der Rastanschlag 53 kann gegenüber dem Rastelement 33 beweglich/verschieblich gelagert sein. Insbesondere durch eine Verlagerung des Rastanschlags 53 kann die Rastverbindung zwischen Rastanschlag 53 und Rastelement 33 lösbar sein. Bevorzugt ist an dem Schieber 40, insbesondere an dem Aufnahmeelement 50, ein Federkörper 42 vorgesehen, an welchem der Rastanschlag 53 vorzugsweise endseitig angeordnet ist.

Mit dem dazu gegenüberliegenden Ende kann der Federkörper 42 an dem Schieber 40, insbesondere an dem Aufnahmeelement 50, festgelegt sein.

Der Aufnahmenocken 11 kann einen Anschlag 13 aufweisen, welcher im betriebsgemäßen Verbindungzustand von Tankringadapter und Verriegelungseinrichtung in Richtung Gehäuse 30 beziehungsweise Federkörper 42, insbesondere in Richtung Rastanschlag 53, zeigt/weist.

Durch Einführen des Aufnahmenockens 11 kann der Anschlag 13 dem Federkörper 42 und/oder dem Rastanschlag 53 zustellbar sein. Durch Einführen des Aufnahmenockens 11 in die Öffnung 31 kann der Anschlag 13 den Rastanschlag 53/den Federkörper 42 aus dessen Verbindung mit dem Rastelement 33 lösen.

Durch das Einführen der Aufnahmenocken 11 in die Öffnungen 31 kann demnach der Eingriff von Rastelement 33 und Rastanschlag 53/Federkörper 42 gelöst und der Schieber 40 in Richtung Halteposition verlagert werden, insbesondere unter Federentspannung der Feder 41.

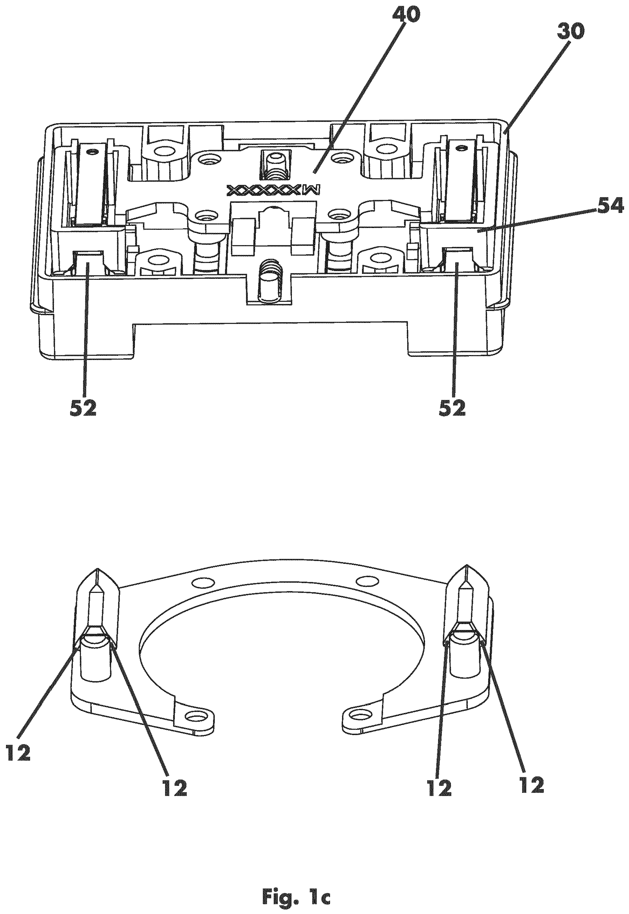

Die Figur 1c zeigt den Gegenstand gemäß der Figuren 1a-b in einer weiteren perspektivischen Darstellung, aus welcher die Aufnahmebereiche 52/Aufnahmeelemente 50 an dem Schieber 40 besonders deutlich hervorgehen. Die Aufnahmebereiche 50 sind zumindest teilweise im Innern des Aufnahmegehäuses 54 bereitgestellt.

Für eine besonders zuverlässige Halterung der Aufnahmenocken 11 an der Verriegelungseinrichtung 20 können diese Flügel 12 aufweisen, welche sich parallel zu einer Längsrichtung der Aufnahmenocken 11 erstrecken können.

Der Schieber 40 beziehungsweise das Aufnahmegehäuse 54 können im Verbindungsbereich/Kontaktbereich mit den Aufnahmenocken 11 Flügel 51 aufweisen, welche die Vorsprünge 12 der Aufnahmenocken 11 hintergreifen können und somit eine besonders zuverlässige Halterung des Tankringadapters in der Verriegelungseinrichtung 20 bereitstellen können.

Die Figuren 2a-e zeigen den Schieber 40 in mehreren perspektivischen und frontalen Darstellungen.

Hierbei ist deutlich die Anordnung der Aufnahmeelemente 50 an dem Schieber 40 mit der Fixierung des Federkörpers 42 an einem Ende des Aufnahmeelements 50 und/oder der Anordnung des Rastanschlags 53 am gegenüberliegenden Ende ersichtlich. Der Federkörper weist eine Federwirkung mit einer Rückstellkraft auf, welche in zuverlässiger Weise das Einrasten in die Verbindung zwischen Rastelement 33 und Rastanschlag 53/Federkörper 42 bereitstellt und zum anderen eine zuverlässige Lösung der Rastverbindung beim Anheben des Federkörpers 42 beziehungsweise des Rastanschlags 53, beispielsweise durch das Einführen der Aufnahmenocken 11 in die Öffnung 31 und dem damit verbundenen Zustellen des Anschlags 30 zu dem Federelement beziehungsweise Rastanschlag 53, bereitstellt.

Vorzugsweise sind die Aufnahmeelemente mit einem Aufnahmegehäuse 54 gebildet, welches bevorzugt zumindest zu der Seite geöffnet ist, welche in der Entriegelungsposition des Schiebers 40 in Richtung Halteposition des Schiebers 40 zeigt. Zudem kann das Gehäuse vorzugsweise nach unten - also in Richtung Tankringadapter - geöffnet sein, wobei bevorzugt Flügel 51 die Öffnung in Längsrichtung parallel zur Verschieberichtung des Schiebers in dem Gehäuse, zumindest teilweise, säumen.

Somit kann der Aufnahmenocken, welcher in die Öffnung 31 des Gehäuses 30 eingeführt ist, durch die erste beschriebene laterale Öffnung in dem Aufnahmeelement 50 in das Aufnahmeelement einführbar sein und im betriebsgemäßen Verbindungszustand von Tankringadapters 10 und Verriegelungseinrichtung 20, wenn der Schieber in der Halteposition angeordnet ist, nach unten durch die zweite beschriebene Öffnung herausragen. Dabei können die Flügel 51 den Aufnahmenocken 11 in der Halteposition hintergreifen, wodurch eine besonders verlässliche Halterung des Aufnahmenockens 11 in der Verriegelungseinrichtung 20 beziehungsweise in dem Aufnahmeelement 50 bereitgestellt ist.

Das Aufnahmeelement 50 beziehungsweise die Flügel 51 können einen angefasten Führungsbereich 55 aufweisen, mittels welchem das Zusammenführen des jeweiligen Aufnahmeelements 50 mit dem jeweils zugehörigen Aufnahmenocken 11 besonders gleichförmig ermöglicht sein kann.

Der angefaste Führungsbereich 55 kann sich an den Flügeln 51 im Bereich der stirnseitigen Öffnung befinden, welche das Aufnahmeelement 50 in Richtung Halteposition des Schiebers 40 aufweisen kann.

Selbst wenn der Aufnahmenocken 11 einen suboptimalen Sitz in der Öffnung 31/im Gehäuse 30 haben sollte, wird dieser durch den angefasten Führungsbereich 55 in die korrekte Position in der Öffnung 31 und in dem Aufnahmegehäuse 54 des Aufnahmeelements 50, insbesondere bei einer Verlagerung des Schiebers aus der Entriegelungsposition in die Halteposition, ausgerichtet.

In der Halteposition ist das Aufnahmegehäuse 54 des Aufnahmeelements 50 in/an/bei/hinter der Öffnung 31 gemeinsam mit dem Aufnahmenocken 11 angeordnet und hält diesen in der Verriegelungseinrichtung.

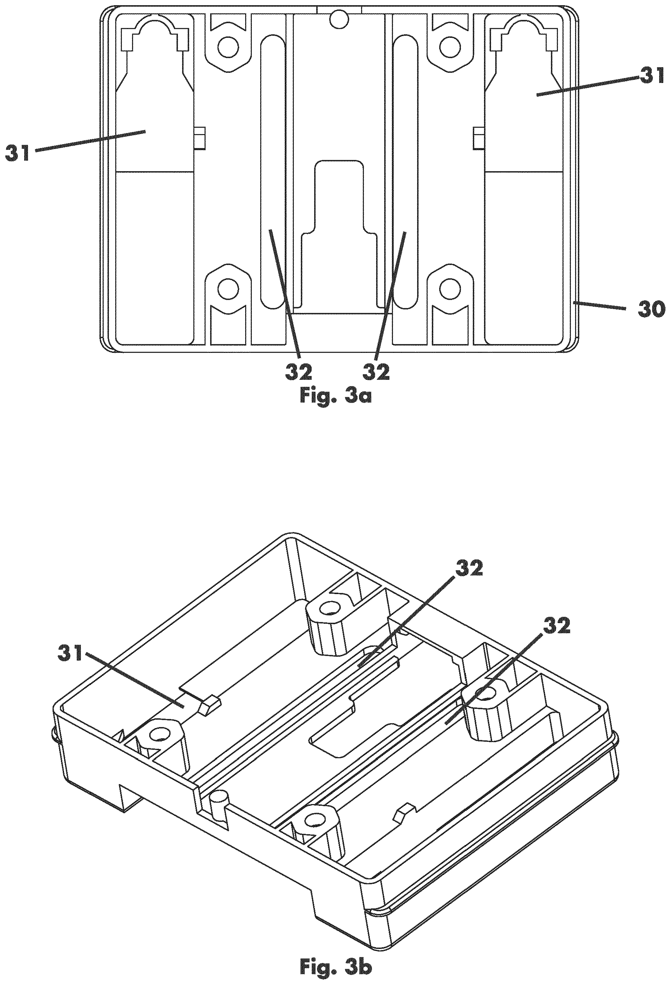

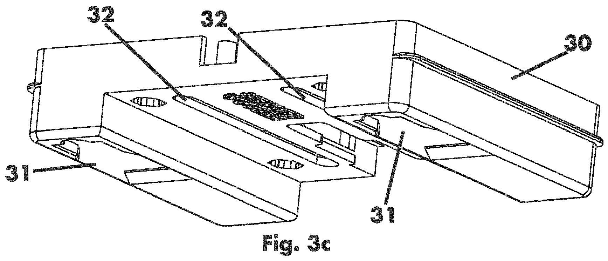

Die Figuren 3a-c zeigen das Gehäuse der Verriegelungseinrichtung ohne die darin beweglich gelagerten Schieber 40.

Über die Öffnungen 31 ist der Aufnahmenocken 11 in das Innere des Gehäuses 30 einführbar und dem Schieber 40 beziehungsweise dessen Aufnahmeelementen 50 in das Aufnahmegehäuse 54 zustellbar.

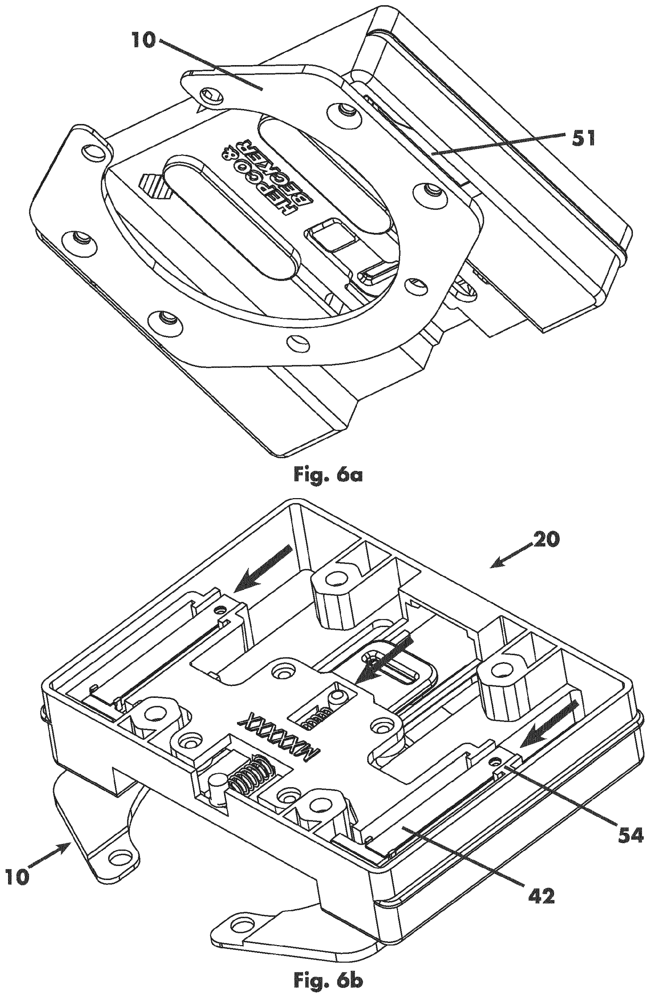

Im betriebsgemäßen Verbindungszustand von Tankringadapter 10 und Verriegelungseinrichtung 20 sind die Aufnahmenocken 11 der Öffnung 31, wie in den Figuren 6a-b dargestellt, einander zugewandt und in diese eingeführt.

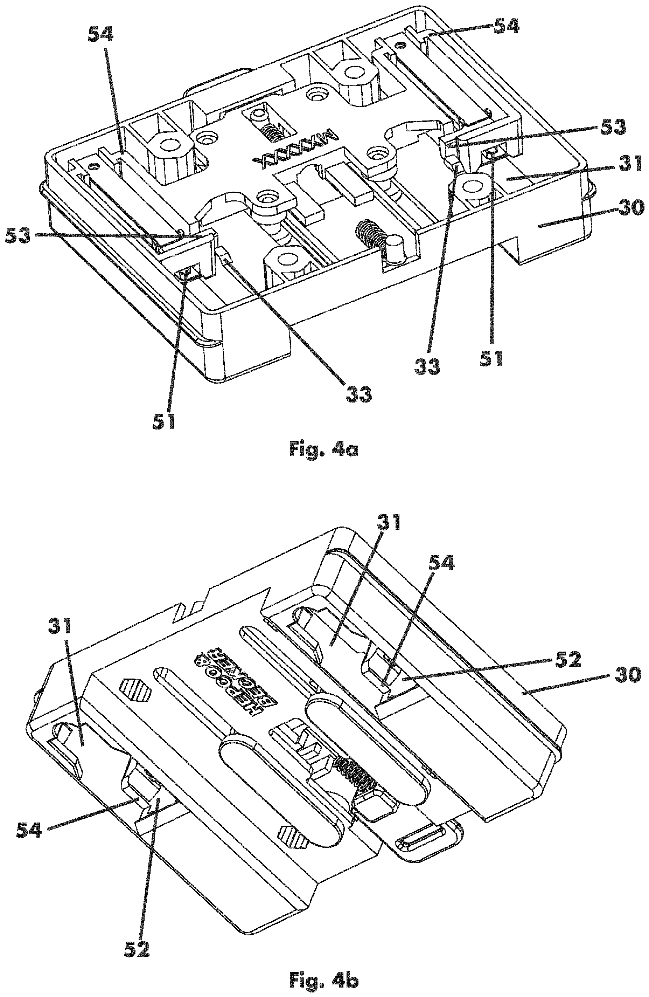

Die Figuren 4a-b zeigen die erfindungsgemäße Verriegelungseinrichtung in der Entriegelungsposition des Schiebers 40, in welcher der Schieber 40 beziehungsweise das Aufnahmeelement 50 soweit aus dem Bereich der Öffnung 31 zurückgezogen sind, dass ein Eingriff des Aufnahmenocken 11 in die Öffnung 31 ermöglicht ist und der Aufnahmenocken 11 von dem Aufnahmeelement 50 hintergreifbar ist.

Dazu kann es vorteilhaft sein, dass das Aufnahmeelement 50 im Bereich der Flügel 51, also in dem, dem Aufnahmenocken 11 zugewandten Teil des Aufnahmeelements 50, eine Aussparung aufweist, also die Flügel 51 grundsätzlich kürzer seinen können als das Aufnahmeelement 50 beziehungsweise das Aufnahmegehäuse 54 insgesamt.

Dadurch kann es ermöglicht sein, dass das Aufnahmeelement 50 in der Entriegelungsposition zwar teilweise in die Öffnung 31 hineinragt, die Zugänglichkeit der Öffnung 31 für den Aufnahmenocken 11 jedoch vollständig gewährleistet ist.

Folglich kann das Freigeben der Öffnung 31 oder des Aufnahmenockens 11 in der Öffnung bereits durch eine relativ geringe Verlagerung des Schiebers erreicht werden, was einer insgesamt verminderten Größe des Gehäuses 30 zuträglich sein kann.

Demnach kann in der Entriegelungsposition des Schiebers 40 die Öffnung durch den unteren Bereich des Aufnahmegehäuse 54, insbesondere durch die Flügel 51, zumindest soweit freigegeben sein, dass die Aufnahmenocken 11 ihrer Länge nach vollständig in die Öffnung 31 einführbar sind.

Durch das Einführen der Aufnahmenocken 11 in die Öffnung 31 kann der Anschlag 13 die Verbindung des Rastanschlags 53/Federkörpers 42 mit dem Rastelement 33 lösen, indem beispielsweise der Rastanschlag 53/Federkörper 42 nach oben aus seiner Verbindung mit dem Rastelement 33 herausgehoben wird. Dadurch kann eine automatische Verlagerung des gelösten Schiebers 40 aus seiner Entriegelungsposition in die Halteposition erfolgen.

Das Einführen der Aufnahmenocken 11 in die Öffnungen 31 kann somit zu einer automatischen Verriegelung und Verbindung von Tankringadapter und Verriegelungseinrichtung beitragen.

Ist der Schieber in der Halteposition, ohne dass die Aufnahmenocke bereits mit der Verriegelungseinrichtung 11 verbunden ist, ist bevorzugt die Verriegelungseinrichtung 20 beziehungsweise sind die Öffnungen im Gehäuse für eine Aufnahme der Aufnahmenocken 11 blockiert. Vorzugsweise erst wenn der Schieber zumindest teilweise in Richtung Entriegelungseinrichtung verlagert ist, ist/sind die Verriegelungseinrichtung 20/ die Öffnungen 31 für eine Aufnahme der Aufnahmenocken 11 freigegeben.

Die Figuren 5a-d zeigen die erfindungsgemäße Verriegelungseinrichtung mit dem Schieber 40 in dessen Halteposition, in welcher die Feder 41 gegenüber der Entriegelungsposition entspannt(er) ist und das Aufnahmeelement 50 beziehungsweise das Aufnahmegehäuse 54 der Öffnung 31 des Gehäuses 30 zugestellt. Dadurch liegen die Öffnung 31 und der Aufnahmebereich 52 des Aufnahmeelements 50 für den Aufnahmenocken 11 übereinander/ineinander.

Nach der vorliegenden Erfindung kann unter der Öffnung 31 nicht nur eine bloße Ausnehmung im Gehäuse 30 verstanden werden, sondern es können auch Aufnahmebereiche im Inneren des Gehäuses sein, welches nach außen hin seinen Abschluss durch eine Öffnung im Gehäuse findet. Demnach können in der Halteposition des Schiebers die Öffnung 31 und der Aufnahmebereich für Aufnahmenocken 52/das Aufnahmegehäuse 54 denselben Bereich der Verriegelungsvorrichtung beschreiben, wie in Figur 5b durch die Bezugszeichen 31/52 angedeutet wird.

Die Pfeile in Figur 5a deuten die Verlagerung des Schiebers 40 entlang der Führungsnuten 32 aus der Entriegelungsposition in Richtung abgebildeter Halteposition an.

Wie aus Figur 5b hervorgeht, ist das Aufnahmegehäuse 54 und insbesondere sind die Flügel 51 dem Bereich oberhalb der Öffnung beziehungsweise der Öffnung zugestellt, wodurch diese die Aufnahmenocken 11 vorzugsweise deren Vorsprung 12 haltend hintergreifen.

Die Figuren 5c-d zeigen den vom Rastelement 33 gelösten Rastanschlag 53/Federelement 42 sowie den Schieber 40 in der Halteposition, wobei die Flügel 51 parallel zur Öffnung 31 im Gehäuse 30 der Öffnung 31 zugestellt sein können, sich also innerhalb der Öffnung beziehungsweise oberhalb der Öffnung 31 befinden.

Demnach kann das Aufnahmeelement 50 beziehungsweise können die Flügel 51 das Herausfallen der Aufnahmenocken 11 aus der Öffnung 31 verhindern.

Die Figuren 6a und 6b zeigen den Tankringverschluss mit dem Tankringadapter 10 und der Verriegelungseinrichtung 20 im betriebsgemäßen Verbindungszustand sowohl in einer Ansicht von oben als auch von unten, bei welcher die Aufnahmenocken 11 in die Öffnungen 31 eingeführt sind und durch das Aufnahmeelement 50 beziehungsweise dessen Flügel 51 in der relativen Position von 10 und 20 festgehalten werden.

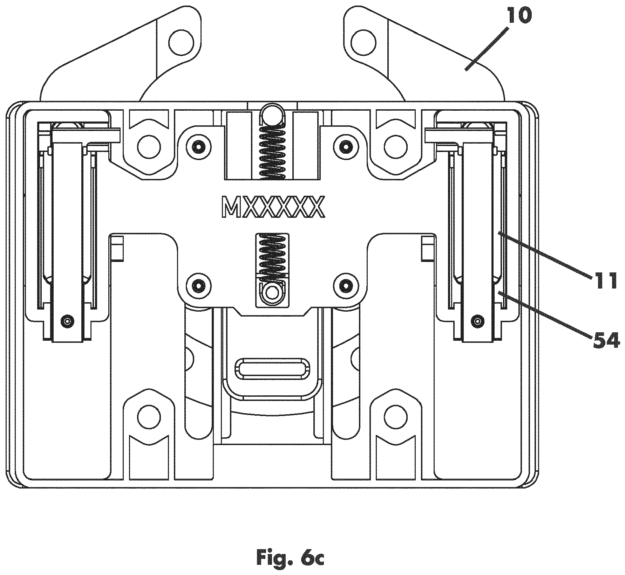

Fig. 6c zeigt den Tankringverschluss mit dem Tankringadapter 10 und der Verriegelungseinrichtung 20 im betriebsgemäßen Verbindungszustand in einer Draufsicht und zeigt das Aufnahmegehäuse 54 in einem dem Aufnahmenocken zugestellten Zustand.

### Bezugszeichenliste

10 Tankringadapter/motoradseitiger Adapter
11 Aufnahmenocken
12 Vorsprung
13 Anschlag
20 Verriegelungseinrichtung/Verriegelungselement
30 Gehäuse
31 Öffnung
32 Führungsnut
33 Rastelement
40 Schieber
41 Rückstellfeder
42 Federkörper
43 Führungselement
50 Aufnahmeelement
51 Flügel
52 Aufnahmebereich für Aufnahmenocken
53 Rastanschlag
54 Aufnahmegehäuse
55 Angefaster Führungsbereich
60 Verbindungsmittel

## Patentansprüche

1. Verschlusselement, insbesondere Tankringverschluss, zum Befestigen eines Gepäckstücks oder eines Motorradzubehörs an einem Motorrad, insbesondere an dessen Tank oder Heck, aufweisend
- einen motoradseitigen Adapter (10),-insbesondere einen Tankringadapter, welcher fest mit dem Motorrad, insbesondere dessen Tank verbindbar ist und zwei im Abstand zueinander, vorzugsweise parallel angeordnete Aufnahmenocken (11) trägt, und
- ein Verriegelungselement (20), welches fest mit der Rückseite des Gepäckstücks oder dem Motorradzubehör verbindbar ist, wobei das Verriegelungselement (20)
o ein statisch am Gepäckstück oder Motoradzubehör festlegbares Gehäuse (30) und
∘ einen beweglich am Gehäuse (30) gelagerten Schieber (40) aufweist, wobei das Gehäuse Öffnungen (31) umfasst, in welche die Aufnahmenocken (11) einführbar sind und der Schieber (40) an dem Gehäuse (30) von einer Halteposition zu einer Entriegelungsposition entgegen einer rückstellenden Federkraft verfahrbar ist, wobei das Verriegelungselement ausgebildet ist, die Aufnahmenocken in den Öffnungen zu halten, wenn sich der Schieber in der Halteposition befindet,
wobei an dem Gehäuse (40) mindestens ein Rastelement (33) angeordnet ist welches jeweils mit einem Federkörper (42) des Schiebers (40) wechselwirkt und ausgebildet ist, den Schieber (40) in der Entriegelungsposition zu halten und dass die Aufnahmenocken (11) einen Anschlag (13) aufweisen, welcher angeordnet ist, beim Einführen der Aufnahmenocken (11) in die Öffnungen (31) mit dem Federkörper (42) wechselzuwirken und diesen von dem Rastelement (33) zu lösen
und **dadurch gekennzeichnet,**
**dass** der Schieber (40) Aufnahmeelemente (50) aufweist, welche für eine ungehinderte Einführbarkeit in die Öffnungen (31) zurückziehbar sind.

2. Verschlusselement nach Anspruch 1,
**dadurch gekennzeichnet,**
**dass** die Federlagerung (41) des Schiebers (40) ausgebildet ist, den Schieber (40) aus der Entriegelungsposition in die Halteposition zu verlagern.

3. Verschlusselement nach einem der Ansprüche 1 oder 2,
**dadurch gekennzeichnet,**
**dass** jeweils einem Aufnahmenocken (11) ein Federelement (42) an dem Schieber (40) zugeordnet ist.

4. Verschlusselement nach einem der Ansprüche 1 bis 3,
**dadurch gekennzeichnet,**
**dass** der Schieber (40) Aufnahmeelemente (50) aufweist, welche den Öffnungen (31) in der Halteposition des Schiebers (40) zugestellt sind.

5. Verschlusselement nach Anspruch 4,
**dadurch gekennzeichnet,**
**dass** die Aufnahmeelemente (50) mindestens einen Flügel (51) aufweisen, welche die Aufnahmenocken (11) haltend hintergreifen, wenn sich der Schieber (40) in der Halteposition befindet.

6. Verschlusselement nach Anspruch 4 oder 5,
**dadurch gekennzeichnet,**
**dass** die Aufnahmenocken (11) auf einer der Öffnung (31) im betriebsgemäßen Verbindungszustand von motoradseitigem Adapter und Verriegelungselement abgewandten Seite mindestens einen Vorsprung (12) aufweisen, welcher von den Aufnahmeelementen (50) hintergriffen ist.

7. Verschlusselement nach einem der Ansprüche 1 bis 6,
**dadurch gekennzeichnet,**
**dass** der Schieber (40) an dem Gehäuse (30) entlang von Führungsnuten (32) verfahrbar gelagert ist.

8. Verschlusselement nach einem der Ansprüche 3 bis 7,
**dadurch gekennzeichnet,**
**dass** das Federelement (42) an dem Schieber (40) oberhalb der Gehäuseöffnung (31) gelagert ist.

9. Verschlusselement nach einem der Ansprüche 1 bis 7,
**dadurch gekennzeichnet,**
**dass** der Schieber (40) ein Verbindungsmittel (60) für eine Verlängerung, insbesondere eine Schlaufe, aufweist, über welche der Schieber (40) in die Entriegelungsposition ziehend verlagerbar ist.

## Claims

1. Locking element, particularly tank ring lock, for attaching luggage or motorcycle accessories to a motorcycle, particularly to its tank or rear, comprising
a motorcycle-side adapter (10), particularly a tank ring adapter, which can be firmly connected to the motorcycle, particularly its tank, and carries two receiving cams (11) arranged at a distance from each other, preferably parallel, and
a locking element (20), which can be firmly connected to the back of the luggage or the motorcycle accessory, wherein the locking element (20) comprises
a housing (30) that can be statically fixed to the luggage or motorcycle accessory and
a slider (40) movably mounted on the housing (30), wherein the housing includes openings (31) into which the receiving cams (11) can be inserted and the slider (40) can be moved on the housing (30) from a holding position to an unlocking position against a restoring spring force, wherein the locking element is designed to hold the receiving cams in the openings when the slider is in the holding position
wherein at least one locking element (33) is arranged on the housing (40), which interacts with a spring body (42) of the slider (40) and is designed to hold the slider (40) in the unlocking position and
wherein the receiving cams (11) have a stop (13) which is arranged to interact with the spring body (42) when inserting the receiving cams (11) into the openings (31) and to release it from the locking element (33),
**characterized in that**
the slider (40) has receiving elements (50) which can be retracted for unhindered insertion into the openings (31).

2. Locking element according to claim 1,
**characterized in that**
the spring mounting (41) of the slider (40) is designed to move the slider (40) from the unlocking position to the holding position.

3. Locking element according to one of claims 1 or 2,
**characterized in that**
a spring element (42) on the slider (40) is assigned to each receiving cam (11).

4. Locking element according to one of claims 1 to 3,
**characterized in that**
the slider (40) has receiving elements (50) which are positioned in front of the openings (31) in the holding position of the slider (40).

5. Locking element according to claim 4,
**characterized in that**
the receiving elements (50) have at least one wing (51) which grips behind the receiving cams (11) in a holding manner when the slider (40) is in the holding position.

6. Locking element according to claim 4 or 5,
**characterized in that**
the receiving cams (11) have at least one protrusion (12) on a side facing away from the opening (31) in the operational connection state of the motorcycle-side adapter and locking element, which is gripped behind by the receiving elements (50).

7. Locking element according to one of claims 1 to 6,
**characterized in that**
the slider (40) is movably mounted on the housing (30) along guide grooves (32).

8. Locking element according to one of claims 3 to 7,
**characterized in that**
the spring element (42) is mounted on the slider (40) above the housing opening (31).

9. Locking element according to one of claims 1 to 7,
**characterized in that**
the slider (40) has a connecting means (60) for an extension, particularly a loop, by which the slider (40) can be moved into the unlocking position by pulling.

## Revendications

1. Élément de verrouillage, en particulier serrure d'anneau de réservoir, pour fixer des bagages ou des accessoires de moto à une moto, en particulier à son réservoir ou à l'arrière, comprenant
*un adaptateur côté moto (10), en particulier un adaptateur d'anneau de réservoir, qui peut être fermement relié à la moto, en particulier à son réservoir, et porte deux cames de réception (11) disposées* à *distance l'une de l'autre, de préférence parallèles, et*
*un élément de verrouillage (20), qui peut être fermement relié à l'arrière du bagage ou de l'accessoire de moto, où l'élément de verrouillage (20) comprend*
- un boîtier (30) qui peut être fixé de manière statique au bagage ou à l'accessoire de moto et
- un coulisseau (40) monté de manière mobile sur le boîtier (30), où le boîtier comprend des ouvertures (31) dans lesquelles les cames de réception (11) peuvent être insérées et le coulisseau (40) peut être déplacé sur le boîtier (30) d'une position de maintien à une position de déverrouillage contre une force de ressort de rappel, où l'élément de verrouillage est conçu pour maintenir les cames de réception dans les ouvertures lorsque le coulisseau est en position de maintien
où au moins un élément de verrouillage (33) est disposé sur le boîtier (40), qui interagit avec un corps de ressort (42) du coulisseau (40) et est conçu pour maintenir le coulisseau (40) en position de déverrouillage et
où les cames de réception (11) ont une butée (13) qui est disposée pour interagir avec le corps de ressort (42) lors de l'insertion des cames de réception (11) dans les ouvertures (31) et pour le libérer de l'élément de verrouillage (33),
**caractérisé en ce que**
le coulisseau (40) a des éléments de réception (50) qui peuvent être rétractés pour une insertion sans entrave dans les ouvertures (31).

2. Élément de verrouillage selon la revendication 1,
**caractérisé en ce que**
le montage à ressort (41) du coulisseau (40) est conçu pour déplacer le coulisseau (40) de la position de déverrouillage à la position de maintien.

3. Élément de verrouillage selon l'une des revendications 1 ou 2,
**caractérisé en ce que**
un élément de ressort (42) sur le coulisseau (40) est attribué à chaque came de réception (11).

4. Élément de verrouillage selon l'une des revendications 1 à 3,
**caractérisé en ce que**
le coulisseau (40) a des éléments de réception (50) qui sont positionnés devant les ouvertures (31) dans la position de maintien du coulisseau (40).

5. Élément de verrouillage selon la revendication 4,
**caractérisé en ce que**
les éléments de réception (50) ont au moins une ailette (51) qui saisit les cames de réception (11) de manière à les maintenir lorsque le coulisseau (40) est en position de maintien.

6. Élément de verrouillage selon la revendication 4 ou 5,
**caractérisé en ce que**
les cames de réception (11) ont au moins une saillie (12) sur un côté opposé à l'ouverture (31) dans l'état de connexion opérationnelle de l'adaptateur côté moto et de l'élément de verrouillage, qui est saisie par derrière par les éléments de réception (50).

7. Élément de verrouillage selon l'une des revendications 1 à 6,
**caractérisé en ce que**
le coulisseau (40) est monté de manière mobile sur le boîtier (30) le long de rainures de guidage (32).

8. Élément de verrouillage selon l'une des revendications 3 à 7,
**caractérisé en ce que**
l'élément de ressort (42) est monté sur le coulisseau (40) au-dessus de l'ouverture du boîtier (31).

9. Élément de verrouillage selon l'une des revendications 1 à 7,
**caractérisé en ce que**
le coulisseau (40) a un moyen de connexion (60) pour une extension, en particulier une boucle, par laquelle le coulisseau (40) peut être déplacé en position de déverrouillage par traction.
